# EUROPEAN PATENT SPECIFICATION

(11) **EP 2 239 626 B1**
(45) Date of publication and mention of the grant of the patent: **22.08.2012**
(21) Application number: 08871958.8
(22) Date of filing: 13.11.2008
(51) Int. Cl.: C08F 26/06, C08K 5/3432, C08L 39/04, C09K 9/02

(54) **ELECTROCHROMIC COMPOSITIONS CONTAINING VIOLOGENS, WHICH CAN BE FORMULATED AND USED AT AMBIENT TEMPERATURE**
BEI UMGEBUNGSTEMPERATUR FORMULIERBARE UND VERWENDBARE ELEKTROCHROME ZUSAMMENSETZUNGEN MIT VIOLOGENEN
COMPOSITIONS ÉLECTROCHROMIQUES À BASE DE VIOLOGÈNES POUVANT ÊTRE FORMULÉES ET APPLIQUÉES À TEMPÉRATURE AMBIANTE

(30) Priority: 31.01.2008 ES 200800258
(43) Date of publication of application: 13.10.2010
(73) Proprietor: Fundacion Cidetec, 20009 San Sebastian (Guipuzcoa) (ES)
(72) Inventor: POZO GONZALO, Cristina, E-20009 San Sebastian (Guipúzcoa) (ES); MARCILLA GARCIA, Rebeca, E-20009 San Sebastian (guipúzcoa) (ES); SALSAMENDI TELLERIA, Maitane, E-20009 San Sebastian (Guipúzcoa) (ES); POMPOSO ALONSO, José, Adolfo, E-20009 San Sebastian (guipúzcoa) (ES); GRANDE TELLERÍA, Hans-Jurgen, E-20009 San Sebastian (Guipúzcoa) (ES)
(74) Representative: Carpintero Lopez, Francisco
(86) International application number: PCT/ES2008/000703
(87) International publication number: WO 2009/095507

(56) References cited:
- EP-A1- 2 162 787
- WO-A1-2006/008776
- US-A1- 2002 181 068
- US-A1- 2006 139 724
- CHIDICHIMO G. ET AL.: 'Solid thermoplastic laminable electrochromic film' CHEM. MATER. vol. 19, no. 3, 2007, pages 353 - 358, XP008138442
- MARCILLA R. ET AL.: 'Tailor-made polymer electrolytes based upon ionic liquids and their application in all-plastic electrochromic devices' ELECTROCHEM. COMMUN. vol. 8, no. 3, 2006, pages 482 - 488, XP025182096
- MORTIMER R.J. ET AL.: 'Electrochromic organic and polymeric materials for display applications' DISPLAYS vol. 27, no. 1, 2006, pages 2 - 18, XP025096288

## Description

### Field of the Invention

The invention relates to the field of electrochromic devices. The invention particularly relates to new viologen-based electrochromic compositions which can be formulated and applied at room temperature, which allow preparing electrochromic devices with heat-sensitive substrates, particularly with fully plastic substrates, with a high degree of transparency and high optical contrast.

### Background of the Invention

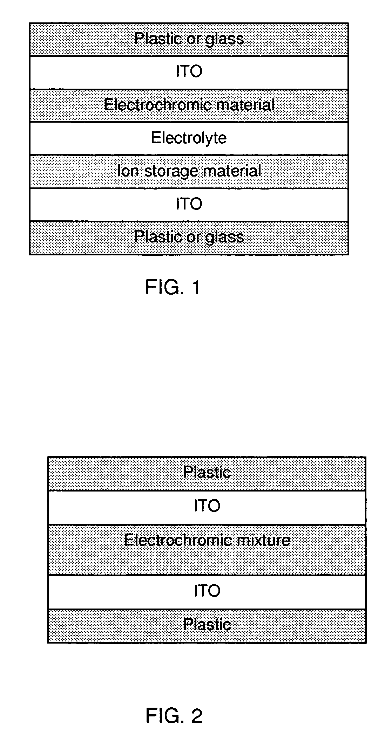

As is well known in the state of the art, a traditional or first-generation electrochromic device is formed by 7 different layers, 3 of them (the innermost ones of Figure 1) being active layers. One of these layers is an active electrochromic material and another one is an ion storage material complementary with the electrochromic material, both in color and in redox behavior. These 2 layers are separated by a layer of solid or liquid electrolyte. The operation of this electrochromic device is based on applying a potential between the conductive substrates such that a redox process occurs both in the electrochromic material and in the ion storage material, giving rise to a structural change of the materials involved which translates into a color change in the device. The preparation of traditional electrochromic devices with 7 layers has limitations, mainly due to the diverse requirements which must be met by the different layers.

The main material on which the device is designed is electrochromic material. Electrochromic materials are classified as cathodic or anodic depending on whether they become colored during a reduction or oxidation process, respectively. Therefore, depending on the color and on the nature of the redox process by which the electrochromic material is colored, a material which is complementary in color and redox process will be necessary. This second material is referred to as ion storage material. Searching for a complementary material is not easy since, in addition to meeting these indicated requirements, both materials must have the same charge content for a correct operation of the device (suitable optical contrast and cyclability). On the other hand, on many occasions liquid electrolytes give rise to solvent leakages or evaporation, whereas solid electrolytes usually have a slower ion and electron transport inside the device.

In the state of the art there are electrochromic devices which are based on solid state films, using a cathodic and anodic electrochromic material of an inorganic or organic nature. Electrochromic devices based on inorganic materials have the main limitations of the deposition techniques used, which require high temperature and high pressure, increasing the price of the end devices (JP 63262624). However, simpler and more cost-effective syntheses are possible by preparing devices based on organic materials since traditional techniques used in paint deposition, with subsequent solvent evaporation, are used (US 3873185). Depending on the nature thereof, the need to evaporate the solvent can be a significant limitation since it increases the cost of the end device.

All these limitations have given rise to the search for new configurations of electrochromic devices with only 5 layers (second-generation devices), such that 3 of the active layers are simplified in a single electrochromic layer prepared from a single electrochromic composition (Figure 2). The main innovation when working according to this strategy is the simplicity in the process for preparing said electrochromic composition and in the preparation of the devices.

The first second-generation electrochromic devices were devices with the electrochromic mixture in solution, in which said solution was injected between two completely sealed conductive crystals through a small hole. The active electrochromic materials in these systems are usually viologen derivatives which become darker when a negative potential is applied and become lighter in the absence of potential with transition times of the order of milliseconds. Said technology, which has reached commercial application, is described in patents US 3453038, US 5115346 and US 5151816. The main limitations of said devices are focused on the difficulty of assembling them (possibility of solvent leakages, reducing the lifetime of the devices) and the possibility of breakages of the device. A strategy used to overcome the limitations of the devices in solution has been proposed by Donnelly in patent US 2005/0079326, which claims an electrochromic solid film prepared by curing electrochromic monomer compositions by exposure to electromagnetic radiation. Another interesting strategy is disclosed in patent WO 2006/008776, which claims a solid film containing active electrochromic materials. Said formulation is prepared under hot conditions, by melting a polymer matrix having embedded therein an electrochromic material, an electron mediator and a solvent with a high boiling point. After a cooling process, said mixture has the appearance of a plastic membrane. The main drawback found in the patent is the need to prepare both the electrochromic mixture and the end device at temperatures above 100ºC. If the original method described in patent WO 2006/008776 on a plastic substrate of the type of PET [poly(ethylene terephthalate)] coated with ITO (indium tin oxide, a reference material in the preparation of fully plastic electrochromic devices) is followed, such substrate is rippled due to the application of heat, causing a distortion of the images which are observed through it and giving rise to a very poor final appearance of the device. Similar consequences would occur in heat-sensitive substrates, such as paper or fabrics (coated with ITO).

Therefore, it is still necessary in the state of the art to prepare electrochromic compositions which can be formulated and applied at room temperature, particularly indicated for the development of fully plastic second-generation electrochromic devices.

The present invention provides a solution to the aforementioned problems and particularly describes new viologen-based electrochromic compositions, such viologens being embedded in a polymer matrix, which can be formulated and applied at room temperature as a result of the use of ionic liquid plasticizers combined with a particular mixture of solvents. Said compositions therefore comprise viologen derivatives embedded in a polymer matrix together with plasticizers, electron mediators and a small percentage of solvents, at least one of them having a high boiling point, which are miscible at room temperature with all the components. These electrochromic compositions have the final appearance of a slightly viscous gel and allow preparing electrochromic devices with heat-sensitive substrates, particularly with fully plastic substrates, with a high degree of transparency and high optical contrast.

### Object of the Invention

The object of the present invention is, therefore, to provide new viologen-based electrochromic compositions which can be formulated and applied at room temperature.

Another object of the invention is to provide a method for preparing said electrochromic compositions.

Finally, another object is to provide a method for preparing electrochromic devices based on said electrochromic compositions.

### Description of the Drawings

Figure 1 shows a traditional first-generation electrochromic device which is formed by 7 different layers, the 3 innermost ones being the active layers.
Figure 2 shows the second-generation electrochromic device of the invention which is formed by 5 layers, in which the innermost layer is the active layer prepared from the electrochromic composition of the invention.

### Detailed Description of the Invention

The present invention provides an electrochromic composition comprising:
(a) a viologen derivative of formula (I): 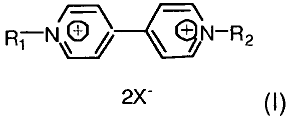 wherein R₁ and R₂ independently represent a linear or branched C₁-C₂₀ alkyl, benzyl, phenyl, p-cyanophenyl or C₃-C₁₂ cycloalkyl group; and X⁻ represents ClO₄⁻, Br⁻, Cl⁻, BF₄⁻, I⁻, PF₆, NO₃⁻, triflate or AsF₆⁻; and
(b) an electron mediator;
   and furthermore comprising
(c) a polymer compound of formula (II): 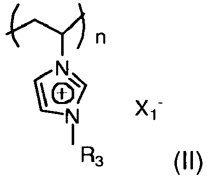 wherein R₃ represents H or a linear or branched C₁-C₁₀ alkyl group; X⁻₁ represents Cl⁻, Br⁻, ClO₄⁻, (CF₃SO₃)⁻, (CF₃SO₂)₂N⁻, (CF₃CF₂SO₂)₂N⁻, BF₄⁻, PF₆⁻, dodecylbenzene sulfonate or p-toluenesulfonate; and n ≥ 2;
(d) a plasticizer of formula (III): 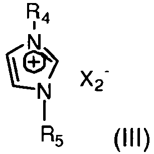 wherein R₄ and R₅ independently represent H, a linear or branched C₁-C₁₀ alkyl or vinyl group; and X⁻₂ represents Cl⁻, Br⁻, ClO₄⁻, (CF₃SO₃)⁻, (CF₃SO₂)₂N⁻, (CF₃CF₂SO₂)₂N⁻, BF₄⁻, PF₆⁻, dodecylbenzene sulfonate or p-toluenesulfonate; and
(e) a mixture of at least two miscible solvents which dissolve components (a) to (d) at room temperature, at least one of them being a solvent having a boiling point above 150°C.

In the context of the invention, the term "electrochromic composition" relates to a solution in which the components thereof are completely or partially dissolved or in suspension, which is formed by at least an electrochromic material and an electron mediator, which is deposited between two conductive substrates and which, by applying a potential, changes color.

As has been indicated above, in the context of the invention, the term "viologen derivative" relates to an active electrochromic material which becomes darker when a negative potential is applied and becomes lighter in the absence of potential. The viologen derivatives used in the present invention have, as a generic formula, formula (I): 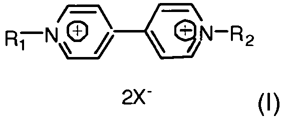 wherein R₁ and R₂ independently represent a linear or branched C₁-C₂₀ alkyl, benzyl, phenyl, p-cyanophenyl or C₃-C₁₂ cycloalkyl group; and X⁻ represents ClO₄⁻, Br⁻, Cl⁻, BF₄⁻, I⁻, PF₆, NO₃⁻, triflate or AsF₆⁻;

In a particular embodiment of the electrochromic composition of the invention, in the viologen of formula (I), R₁ and R₂ are identical and represent a C₁-C₉ alkyl group. In this case, the electrochromic composition of the invention allows preparing blue devices. In a preferred embodiment, R₁ and R₂ are identical and represent an ethyl group.

In another particular embodiment of the electrochromic composition of the invention, in the viologen of formula (I), R₁ and R₂ are identical and represent a C₁₀-C₂₀ alkyl group. In this case, the electrochromic composition of the invention allows preparing red/violet devices.

In another particular embodiment of the electrochromic composition of the invention, in the viologen of formula (I), R₁ and R₂ are identical and represent a benzyl, phenyl or p-cyanophenyl group. In this case, the electrochromic composition of the invention allows preparing green devices.

Said viologen of formula (I) will be used in the electrochromic composition of the invention in a ratio of 3-20% with respect to the total weight of the composition.

The polymer matrix of the present invention, the role of which is to provide suitable mechanical properties to the final mixture, preferably has the chemical structure represented by formula (II): 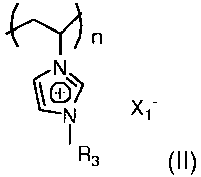 wherein R₃ represents H or a linear or branched C₁-C₁₀ alkyl group; X⁻₁ represents Cl⁻, Br⁻, ClO₄⁻, (CF₃SO₃)⁻, (CF₃SO₂)₂N⁻, (CF₃CF₂SO₂)₂N⁻, BF₄⁻, PF₆⁻, dodecylbenzene sulfonate or p-toluenesulfonate; and n≥2

In a particular embodiment of the electrochromic composition of the invention, in the polymer compound of formula (II) R₃ represents a C₁-C₄ alkyl group and X⁻₁ represents ClO₄⁻, (CF₃SO₃)⁻ or BF₄⁻. In a preferred embodiment, R₃ represents ethyl and X⁻₁ represents BF₄⁻.

Conventional polymers, of the poly(vinylpyrrolidone) type, soluble at room temperature in the mixture of organic solvents used, can optionally be used.

Said polymer compound of formula (II) will be used in the electrochromic composition of the invention in a ratio of 35-45% with respect to the total weight of the composition.

In the present invention, the plasticizer has the dual function of providing optimal adhesion properties and, furthermore, of favoring the mobility of charges inside the electrochromic mixture. A novel aspect of the invention is the use of ionic liquid-based plasticizers having, as a general formula, formula (III): 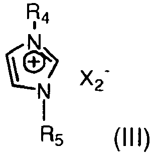 wherein R₄ and R₅ independently represent H, a linear or branched C₁-C₁₀ alkyl or vinyl group; and X⁻₂ represents Cl⁻, Br⁻, ClO₄⁻, (CF₃SO₃)⁻, (CF₃SO₂)₂N⁻ , (CF₃CF₂SO₂)₂N⁻, BF₄⁻, PF₆⁻, dodecylbenzene sulfonate or p-toluenesulfonate.

In a particular embodiment of the electrochromic composition of the invention, in the plasticizer of formula (III) R₄ and R₅ independently represent a C₁-C₄ alkyl group and X⁻₂ represents ClO₄⁻, (CF₃SO₃)⁻ or BF₄⁻. In a preferred embodiment, R₄ represents butyl, R₅ represents methyl and X⁻₂ represents BF₄⁻.

The plasticizer of formula (III) will be used in the electrochromic composition of the invention in a ratio of 35-59% with respect to the total weight of the composition.

As has been indicated above, in the context of the invention, the term "electron mediator" relates to the component necessary for the redox reaction to occur in the electrochromic device, which must be complementary in redox behavior with the active electrochromic material of the invention, i.e., with the viologen derivative of general formula I. In the present invention any suitable electron mediator of the art can be used.

Thus, in a particular embodiment of the electrochromic composition of the invention, the electron mediator is selected from among hexacyanoferrate (II), periodate, Fe²⁺, and hydroquinone. The person skilled in the art will select the suitable counterion of the first three. In a preferred embodiment, the electron mediator is hydroquinone.

Said electron mediator will be used in the electrochromic composition of the invention in a ratio of 0.9-6% with respect to the total weight of the composition.

In the electrochromic composition of the present invention, a mixture of at least two miscible solvents which dissolve the aforementioned components (a) to (d) at room temperature, at least one of them being a solvent with a high boiling point, is used.

In the context of the invention, the term "solvent with a high boiling point" relates to a solvent the boiling point of which is above 150ºC.

Thus, in a particular embodiment of the electrochromic composition of the invention, the solvent with a high boiling point is selected from among dimethylformamide and 1-hexanol.

Acetone, butanone or tetrahydrofuran (THF), among others, must be mentioned as additional solvents with a low boiling point to be used in small amounts together with the mentioned solvents with a high boiling point. The skilled person will select the suitable solvent with a low boiling point from among those known in the state of the art.

In a preferred embodiment of the electrochromic composition of the invention, the mixture of solvents is a mixture of dimethylformamide and acetone.

In the electrochromic composition of the invention, a volume of the solvent with a high boiling point of the order of 0.5-1 ml and a volume of the solvent with a low boiling point of the order of 0.2-0.6 ml are used, the preferred ratio between them being of the order of 2:1.

A small amount of glass spacers having a suitable diameter can additionally be used to limit the thickness of the active electrochromic layer during the construction of the electrochromic device. Thus, in a particular embodiment of the invention, the electrochromic composition additionally comprises glass spacers with a diameter of 1-10 µm.

In another aspect of the invention, a method for preparing the electrochromic composition described above is provided, in which components (a) to (e) are mixed at room temperature and with stirring.

The preparation of the electrochromic composition at room temperature includes dissolving the components described above in the smallest possible amount of solvents, under stirring, until obtaining a homogeneous mixture which does not need curing. The final appearance of the composition, of a gel type, has a viscosity that is very suitable for handling it at room temperature. This viscosity makes it very easy to deposit the mixture using common deposition techniques used in paints.

In another aspect of the invention, an electrochromic device comprising the electrochromic composition described above is provided.

In another aspect of the invention, a method for preparing an electrochromic device is provided, which method comprises the steps of: (i) depositing the electrochromic composition described above on a conductive substrate; and (ii) depositing another conductive substrate on the assembly.

The conductive substrate can be a substrate made of any conductive material such as plastic coated with ITO, textile material, paper or glass, which is furthermore transparent so that the color change of the device can be observed.

The deposition of the electrochromic composition of the invention is performed at room temperature by means of techniques of the state of the art which allow a homogeneous and optimal deposition. Thus, in a particular embodiment, the deposition of step (i) is performed by spin-coating, doctor blade coating or dip-coating techniques.

The typical thickness of the gel type layer is comprised between 20 and 200 µm depending on the technology and conditions of application of the formulation. This makes it comfortable and easy to assemble the device, eliminating possible bubbles and defects which might arise.

Once the electrochromic composition of the invention is deposited, another conductive substrate, preferably of the same type as the one used in the first substrate, is deposited thereon. The device thus prepared is optionally pressed at room temperature to assure a homogeneous thickness. In the event of using spacers, the final thickness will be determined by the diameter of the spacers placed and will be of the order of 1.5-10 µm. Finally, the electrochromic device can be encapsulated in a suitable manner following conventional techniques in order to obtain good values of stability and cyclability of the device.

The following example illustrates the invention and must not be considered as limiting the scope thereof.

### Example 1

### Preparation of a blue electrochromic device which uses an electrochromic composition of the invention.

An electrochromic composition was prepared by dissolving the following compounds in a 2:1 (v/v) DMF/acetone mixture (0.76 ml of DMF from Aldrich, 99% purity, and 0.4 ml of acetone from Panreac, purity PA-ACS-ISO) at room temperature: 40% by weight of the polymer poly(1-vinyl-3-ethyl-imidazolium tetrafluoroborate) (synthesized in CIDETEC according to the method described in Journal of Polymer Science Part A: Polymer Chemistry 42 (2004) 208), 40% by weight of 1-butyl-3-methyl-imidazolium tetrafluoroborate (Solvionic, 98% purity), 16% by weight of ethylviologen diperchlorate (Aldrich, 98% purity), and 4% by weight of hydroquinone (Riedel-de Haën, 99.5% purity).

The mixture was left stirring for 30 minutes at room temperature until obtaining a completely homogeneous and slightly viscous solution. Glass spacers with a diameter or 1.5 µm were subsequently added under stirring.

The mixture was applied on plastic ITO by means of the traditional doctor blade paint deposition technique. The excess of solvent with a low boiling point was subsequently left to evaporate at room temperature. Then, a second layer of plastic ITO was placed on the electrochromic mixture (see Figure 2) and pressure was applied on the end device, to give rise to a device with an active electrochromic layer thickness of 1.5 µm. Finally, the device was sealed using a UV-curable epoxy resin.

The device thus constructed showed a maximum optical contrast of 80% and transition times of 5.5 and 5.6 seconds during the coloring and bleaching processes, respectively. The device was subjected to cyclability studies (above 2.10³ cycles) with highly satisfactory results.

## Claims

1. Electrochromic composition comprising:
(a) a viologen derivative of formula (I): 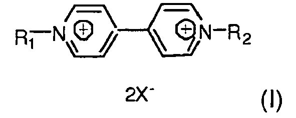 wherein R₁ and R₂ independently represent a linear or branched C₁-C₂₀ alkyl, benzyl, phenyl, p-cyanophenyl or C₃-C₁₂ cycloalkyl group; and X⁻ represents ClO₄⁻, Br⁻, Cl⁻, BF₄⁻, I⁻, PF₆, NO₃⁻, triflate or AsF₆⁻; and
(b) an electron mediator;
**characterized in that** it furthermore comprises:
(c) a polymer compound of formula (II): 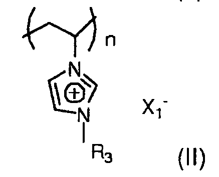 wherein R₃ represents H or a linear or branched C₁-C₁₀ alkyl group; X⁻₁ represents Cl⁻, Br⁻, ClO₄⁻, (CF₃SO₃)⁻, (CF₃SO₂)₂N⁻, (CF₃CF₂SO₂)₂N⁻, BF₄⁻, PF₆⁻, dodecylbenzene sulfonate or p-toluenesulfonate; and n ≥ 2;
(d) a plasticizer of formula (III): 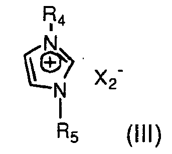 wherein R₄ and R₅ independently represent H, a linear or branched C₁-C₁₀ alkyl or vinyl group; and X⁻₂ represents Cl⁻, Br⁻, ClO₄⁻, (CF₃SO₃)⁻, (CF₃SO₂)₂N⁻, (CF₃CF₂SO₂)₂N⁻, BF₄⁻, PF₆⁻, dodecylbenzene sulfonate or p-toluenesulfonate; and
(e) a mixture of at least two miscible solvents which dissolve components (a) to (d) at room temperature, at least one of them being a solvent having a boiling point above 150°C

2. Composition according to claim 1, **characterized in that** in the viologen of formula (I), R₁ and R₂ are identical and represent a C₁-C₉ alkyl group.

3. Composition according to claim 2, **characterized in that** R₁ and R₂ are identical and represent an ethyl group.

4. Composition according to claim 1, **characterized in that** in the viologen of formula (I), R₁ and R₂ are identical and represent a C₁₀-C₂₀ alkyl group.

5. Composition according to claim 1, **characterized in that** in the viologen of formula (I), R₁ and R₂ are identical and represent a benzyl, phenyl or p-cyanophenyl group.

6. Composition according to claim 1, **characterized in that** in the polymer compound of formula (II), R₃ represents a C₁-C₄ alkyl group and X⁻₁ represents ClO₄⁻, (CF₃SO₃)⁻ or BF₄⁻.

7. Composition according to claim 6, **characterized in that** in the polymer compound of formula (II), R₃ represents ethyl and X⁻₁ represents BF₄⁻.

8. Composition according to claim 1, **characterized in that** in the plasticizer of formula (III), R₄ and R₅ independently represent a C₁-C₄ alkyl group and X⁻₂ represents ClO₄⁻, (CF₃SO₃)⁻ or BF₄⁻.

9. Composition according to claim 8, **characterized in that** in the plasticizer of formula (III), R₄ represents butyl, R₅ represents methyl and X⁻₂ represents BF₄⁻.

10. Composition according to claim 1, **characterized in that** the electron mediator is selected from among hexacyanoferrate (II), periodate, Fe²⁺ and hydroquinone.

11. Composition according to claim 10, **characterized in that** the electron mediator is hydroquinone.

12. Composition according to claim 1, **characterized in that** in the mixture of solvents, the solvent with a high boiling point is selected from among dimethylformamide and 1-hexanol.

13. Composition according to claim 12, **characterized in that** the mixture of solvents is a mixture of dimethylformamide and acetone.

14. Composition according to claim 1, **characterized in that** it additionally comprises glass spacers with a diameter of 1-10 µm.

15. Method for preparing the electrochromic composition of claims 1-14, **characterized in that** components (a) to (e) are mixed at room temperature and with stirring.

16. Electrochromic device comprising the electrochromic composition of claims 1-14.

17. Method for preparing an electrochromic device, **characterized in that** it comprises the steps of: (i) depositing the electrochromic composition of claims 1-14 on a conductive substrate; and (ii) depositing another conductive substrate on the assembly.

18. Method according to claim 17, **characterized in that** the deposition of step (i) is performed by spin-coating, doctor blade coating or dip-coating techniques.

## Patentansprüche

1. Elektrochrome Zusammensetzung, umfassend:
(a) ein Viologenderivat der Formel (I): 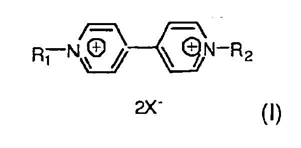 wobei R₁ und R₂ unabhängig für eine lineare oder verzweigte C₁-C₂₀-Alkyl-, Benzyl-, Phenyl-, p-Cyanophenyl- oder C₃-C₁₂-Cycloalkylgruppe stehen und X- für ClP₄⁻, Br⁻, Cl⁻, BF₄⁻, I⁻, PF₆⁻, NO₃⁻, Triflat oder AsF₆⁻ steht; und
(b) einen Elektronenmediator;
**dadurch gekennzeichnet, dass** sie weiterhin umfasst:
(c) eine Polymerverbindung der Formel (II): 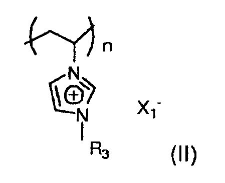 wobei R₃ für H oder eine lineare oder verzweigte C₁-C₁₀-Alkylgruppe steht, X⁻₁ für Cl⁻, Br⁻, ClO₄⁻, (CF₃SO₃)⁻, (CF₃SO₂)₂N⁻, (CF₃CF₂SO₂)₂N⁻, BF₄⁻, PF₆⁻, Dodecylbenzolsulfonat oder p-Toluolsulfonat steht und n ≥ 2 ist;
(d) einen Weichmacher der Formel (III): 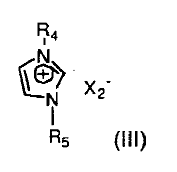 wobei R₄ und R₅ unabhängig für H, eine lineare oder verzweigte C₁-C₁₀-Alkyl- oder Vinylgruppe stehen und X⁻₂ für Cl⁻, Br⁻, ClO₄⁻, (CF₃SO₃)⁻, (CF₃SO₂)₂N⁻, (CF₃CF₂SO₂)₂N⁻, BF₄⁻, PF₆⁻, Dodecylbenzolsulfonat oder p-Toluolsulfonat steht; und
e) ein Gemisch aus wenigstens zwei mischbaren Lösungsmitteln, die die Komponenten (a) bis (d) bei Raumtemperatur auflösen, wobei wenigstens eines davon ein Lösungsmittel mit einem Siedepunkt oberhalb 150 °C ist.

2. Zusammensetzung gemäß Anspruch 1, **dadurch gekennzeichnet, dass** R₁ und R₂ in dem Viologen der Formel (I) gleich sind und für eine C₁-C₉-Alkylgruppe stehen.

3. Zusammensetzung gemäß Anspruch 2, **dadurch gekennzeichnet, dass** R₁ und R₂ gleich sind und für eine Ethylgruppe stehen.

4. Zusammensetzung gemäß Anspruch 1, **dadurch gekennzeichnet, dass** R₁ und R₂ in dem Viologen der Formel (I) gleich sind und für eine C₁₀-C₂₀-Alkylgruppe stehen.

5. Zusammensetzung gemäß Anspruch 1, **dadurch gekennzeichnet, dass** R₁ und R₂ in dem Viologen der Formel (I) gleich sind und für eine Benzyl-, Phenyl- oder p-Cyanophenylgruppe stehen.

6. Zusammensetzung gemäß Anspruch 1, **dadurch gekennzeichnet, dass** in der Polymerverbindung der Formel (II) R₃ für eine C₁-C₄-Alkylgruppe steht und X⁻₁ für ClO₄⁻, (CF₃SO₃)⁻ oder BF₄⁻ steht.

7. Zusammensetzung gemäß Anspruch 6, **dadurch gekennzeichnet, dass** in der Polymerverbindung der Formel (II) R₃ für Ethyl steht und X⁻₁ für BF₄⁻ steht.

8. Zusammensetzung gemäß Anspruch 1, **dadurch gekennzeichnet, dass** in dem Weichmacher der Formel (III) R₄ und R₅ unabhängig für eine C₁-C₄-Alkylgruppe stehen und X⁻₂ für ClO₄⁻, (CF₃SO₃)⁻ oder BF₄⁻ steht.

9. Zusammensetzung gemäß Anspruch 8, **dadurch gekennzeichnet, dass** in dem Weichmacher der Formel (III) R₄ für Butyl steht, R₅ für Methyl steht und X⁻₂ für BF₄⁻ steht.

10. Zusammensetzung gemäß Anspruch 1, **dadurch gekennzeichnet, dass** der Elektronenmediator aus Hexacyanoferrat(II), Periodat, Fe²⁺ und Hydrochinon ausgewählt ist.

11. Zusammensetzung gemäß Anspruch 10, **dadurch gekennzeichnet, dass** der Elektronenmediator Hydrochinon ist.

12. Zusammensetzung gemäß Anspruch 1, **dadurch gekennzeichnet, dass** das Lösungsmittel mit dem hohen Siedepunkt in dem Lösungsmittelgemisch aus Dimethylformamid und 1-Hexanol ausgewählt ist.

13. Zusammensetzung gemäß Anspruch 12, **dadurch gekennzeichnet, dass** das Lösungsmittelgemisch ein Gemisch von Dimethylformamid und Aceton ist.

14. Zusammensetzung gemäß Anspruch 1, **dadurch gekennzeichnet, dass** sie zusätzlich Glasabstandshalter mit einem Durchmesser von 1-10 µm umfasst.

15. Verfahren zur Herstellung der elektrochromen Zusammensetzung gemäß den Ansprüchen 1-14, **dadurch gekennzeichnet, dass** die Komponenten (a) bis (e) bei Raumtemperatur und unter Rühren miteinander vermischt werden.

16. Elektrochrome Vorrichtung, die die elektrochrome Zusammensetzung gemäß den Ansprüchen 1-14 umfasst.

17. Verfahren zur Herstellung einer elektrochromen Vorrichtung, **dadurch gekennzeichnet, dass** es die folgenden Schritte umfasst: (i) Abscheiden der elektrochromen Zusammensetzung gemäß den Ansprüchen 1-14 auf einem leitfähigen Substrat; und (ii) Abscheiden eines anderen leitfähigen Substrats auf dem Verbund.

18. Verfahren gemäß Anspruch 17, **dadurch gekennzeichnet, dass** die Abscheidung von Schritt (i) durch Schleuderbeschichtungs-, Rakelbeschichtungs- oder Tauchbeschichtungstechniken durchgeführt wird.

## Revendications

1. Composition électrochromique comprenant:
(a) un dérivé de viologène de formule (I): 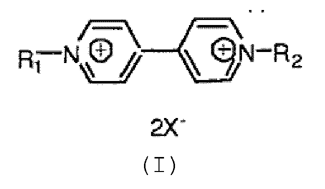 dans laquelle R₁ et R₂ représentent indépendamment un groupe alkyle en C₁ à C₂₀ linéaire ou ramifié, benzyle, phényle, p-cyanophényle ou cycloalkyle en C₃ à C₁₂; et X⁻ représente ClO₄-, Br⁻, Cl⁻, BF₄⁻, I⁻, PF₆, NO₃⁻, triflate ou AsF₆⁻; et
(b) un médiateur d'électrons;
**caractérisée en ce qu'**elle comprend en outre:
(c) un composé polymère de formule (II): 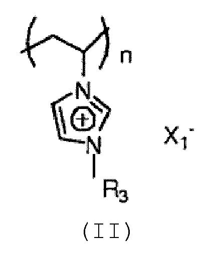 dans laquelle R₃ représente H ou un groupe alkyle en C₁ à C₁₀ linéaire ou ramifié; X⁻₁ représente Cl⁻, Br⁻, ClO₄⁻, (CF₃SO₃)⁻, (CF₃SO₂)₂N⁻ , (CF₃CF₂SO₂)₂N⁻*,* BF₄⁻ , PF₆⁻, dodécylbenzènesulfonate ou p-toluènesulfonate; et n ≥ 2;
(d) un plastifiant de formule (III) : 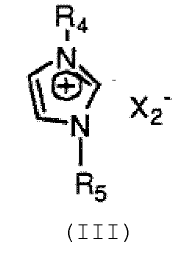 dans laquelle R₄ et R₅ représentent indépendamment H ou un groupe alkyle en C₁ à C₁₀ linéaire ou ramifié ou vinyle; et X⁻₂ représente Cl⁻, Br⁻, ClO₄-, (CF₃SO₃) , (CF₃SO₂)₂N⁻, (CF₃CF₂SO₂)₂N⁻, BF₄⁻, PF₆⁻, dodécylbenzènesulfonate ou p-toluènesulfonate; et
(e) un mélange d'au moins deux solvants miscibles qui dissolvent les composants (a) à (d) à la température ambiante, au moins l'un d'entre eux étant un solvant ayant un point d'ébullition supérieur à 150°C.

2. Composition selon la revendication 1, **caractérisée en ce que**, dans le viologène de formule (I), R₁ et R₂ sont identiques et représentent un groupe alkyle en C₁ à C₉.

3. Composition selon la revendication 2, **caractérisée en ce que** R₁ et R₂ sont identiques et représentent un groupe éthyle.

4. Composition selon la revendication 1, **caractérisée en ce que**, dans le viologène de formule (I), R₁ et R₂ sont identiques et représentent un groupe alkyle en C₁₀ à C₂₀.

5. Composition selon la revendication 1, **caractérisée en ce que**, dans le viologène de formule (I), R₁ et R₂ sont identiques et représentent un groupe benzyle, phényle ou p-cyanophényle.

6. Composition selon la revendication 1, **caractérisée en ce que**, dans le composé polymère de formule (II), R₃ représente un groupe alkyle en C₁ à C₄ et X⁻₁ représente ClO₄⁻, (CF₃SO₃) ou BF₄⁻.

7. Composition selon la revendication 6, **caractérisée en ce que**, dans le composé polymère de formule (II), R₃ représente éthyle et X⁻₁ représente BF₄⁻.

8. Composition selon la revendication 1, **caractérisée en ce que**, dans le plastifiant de formule (III), R₄ et R₅ représentent indépendamment un groupe alkyle en C₁ à C₄ et X⁻₂ représente ClO₄⁻, (CF₃SO₃) ou BF₄⁻.

9. Composition selon la revendication 8, **caractérisée en ce que**, dans le plastifiant de formule (III), R₄ représente butyle, R₅ représente méthyle et X⁻₂ représente BF₄⁻.

10. Composition selon la revendication 1, **caractérisée en ce que** le médiateur d'électrons est choisi parmi un hexacyanoferrate(II), un periodate, Fe²⁺ et une hydroquinone.

11. Composition selon la revendication 10, **caractérisée en ce que** le médiateur d'électrons est une hydroquinone.

12. Composition selon la revendication 1, **caractérisée en ce que**, dans le mélange de solvants, le solvant ayant un haut point d'ébullition est choisi parmi le diméthylformamide et le 1-hexanol.

13. Composition selon la revendication 12, **caractérisée en ce que** le mélange de solvants est un mélange de diméthylformamide et d'acétone.

14. Composition selon la revendication 1, **caractérisée en ce qu'**elle comprend de plus des écarteurs en verre ayant un diamètre de 1 à 10 µm.

15. Procédé pour préparer la composition électrochromique des revendications 1 à 14, **caractérisé en ce que** les composants (a) à (e) sont mélangés à la température ambiante et sous agitation.

16. Dispositif électrochromique comprenant la composition électrochromique des revendications 1 à 14.

17. Procédé pour préparer un dispositif électrochromique, **caractérisé en ce qu'**il comprend les étapes consistant à: (i) déposer la composition électrochromique des revendications 1 à 14 sur un substrat conducteur; et (ii) déposer un autre substrat conducteur sur l'assemblage.

18. Procédé selon la revendication 17, **caractérisé en ce que** la déposition de l'étape (i) est effectuée par des techniques de revêtement centrifuge, de revêtement à la lame docteur ou de revêtement par immersion.
